# EUROPEAN PATENT APPLICATION

(11) **EP 3 010 112 A1**
(43) Date of publication of application: **20.04.2016**
(21) Application number: 15185938.6
(22) Date of filing: 18.09.2015
(51) Int. Cl.: H02J 7/00, G01R 31/36, H01M 10/44, H02J 7/04

(54) **METHOD AND SYSTEM FOR CHARGING A BATTERY**

(30) Priority: 14.10.2014 US 201462063888 P
(71) Applicant: Pace Plc, Bradford BD18 3LF (GB)
(72) Inventor: HENDERSON, Michael, Shipley, BD18 3LF (GB)
(74) Representative: Wood, Graham

(57) **Abstract**

A method, computer system, and non-transitory computer-readable storage medium containing instructions for charging a battery are disclosed. The method involves determining (206) a stored charge of a battery, modifying (210, 212) a charging parameter based on (208) the stored charge of the battery and a back-up requirement, and charging (202) the battery based on the charging parameter.

## Description

Many devices use power supplies to provide backup power in the event of a power failure. Often, critical systems have a requirement of time, referred to as a "back-up requirement," over which the battery must provide backup power. For example, a telephone service provider may require that its telephone equipment be able to provide telephone service for at least four hours (e.g., a four hour back-up requirement) during a power outage. Accordingly, a battery capable of providing at least four hours of backup power is included in the telephone equipment.

However, even if a battery that is capable of providing, for example, at least four hours of backup power is initially included in telephone equipment, the battery may not be able to continue to provide four hours of backup power because excessive charging of the Li-ion battery can cause the battery to deteriorate.

In a first aspect of the invention there is provided a method for charging a battery, the method characterized by the steps of determining a stored charge of a battery; modifying a charging parameter based on the stored charge of the battery and a back-up requirement; and charging the battery based on the charging parameter.

In one embodiment of the invention the charging parameter is further modified based on a margin. In on embodiment the modifying of the charging parameter comprises decreasing the charging parameter if the determined stored charge of the battery exceeds the back-up requirement plus the margin and increasing the charging parameter if the determined stored charge of the battery does not exceed the back-up requirement plus the margin.

In one embodiment the charging parameter is a charge termination voltage.

In one embodiment the charging parameter is modified by a fixed increment.

In an alternative embodiment the charging parameter is modified by a variable increment.

In one embodiment the determining and modifying are triggered by the occurrence of an unplanned event that discharges the battery. In another embodiment the determining and modifying are triggered by the occurrence of a planned event that discharges the battery.

In one embodiment the determining and modifying are triggered by the expiration of a fixed interval and further comprising resetting the fixed interval if the battery is discharged before the expiration of the fixed interval.

In one embodiment the back-up requirement is defined in terms of a length of time over which the battery can supply power.

In a second aspect of the invention there is provided a computer system, the computer system comprising: a battery; a power interface, coupled to the battery via a power bus; a battery charge controller coupled to the battery via a data bus; and a processor and memory coupled to the battery charge controller via the data bus and to the power interface via the power bus; characterized in that the battery charge controller, the processor, and the memory are configured to: determine a stored charge of the battery; modify a charging parameter based on the stored charge of the battery and a back-up requirement; and control charging of the battery based on the charging parameter.

In one embodiment the charging parameter is further modified based on a margin.

In one embodiment the system is further configured to decrease the charging parameter if the determined stored charge of the battery exceeds the back-up requirement plus the margin and to increase the charging parameter if the determined stored charge of the battery does not exceed the back-up requirement plus the margin.

In one embodiment the charging parameter is a charge termination voltage.

In one embodiment the system is further configured to modify the charging parameter by a variable increment.

In one embodiment the computer system is triggered to determine a stored charge of the battery and modify a charging parameter based on the stored charge of the battery and back-up requirement by the expiration of a fixed interval and is further configured to reset the fixed interval if the battery is discharged before the expiration of the fixed interval.

In a third aspect of the invention there is provided a non-transitory computer-readable storage medium characterized in that the medium includes instructions that, when executed in a computing device, cause the computing device to carry out the steps of: determining a stored charge of a battery; modifying a charging parameter based on the stored charge of the battery and a back-up requirement; and charging the battery based on the charging parameter.

In one embodiment the charging parameter is further modified based on a margin.

In one embodiment the modifying of the charging parameter comprises decreasing the charging parameter if the determined stored charge of the battery exceeds the back-up requirement plus a margin and increasing the charging parameter if the determined stored charge of the battery does not exceed the back-up requirement plus a margin.

In one embodiment the charging parameter is modified by a variable increment.

In one embodiment the determining and modifying are triggered by the expiration of a fixed interval and further comprising resetting the fixed interval if the battery is discharged before the expiration of the fixed interval.

In one embodiment the back-up requirement is defined in terms of a length of time over which the battery can supply power.

Other aspects and advantages of embodiments of the present invention will become apparent from the following detailed description taken in conjunction with the accompanying drawings.
Fig. 1 is a block diagram of a voice over IP (VoIP) residential gateway for use in a VoIP telephonic system.
Fig. 2 is a flowchart diagram of a method for charging a battery in accordance with an embodiment of the invention.
Fig. 3 is a graph of the voltage of a battery as a percentage of the maximum charge termination voltage of the battery over a series of charging cycles in accordance with an embodiment of the invention.
Fig. 4A is a graph of the charge termination voltage over a series of charging cycles when the charge termination voltage is modified at a fixed rate in accordance with an embodiment of the invention.
Fig. 4B is a graph of the charge termination voltage over a series of charging cycles when the charge termination voltage is modified at a variable rate in accordance with an embodiment of the invention.

Throughout the description, similar reference numbers may be used to identify similar elements.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

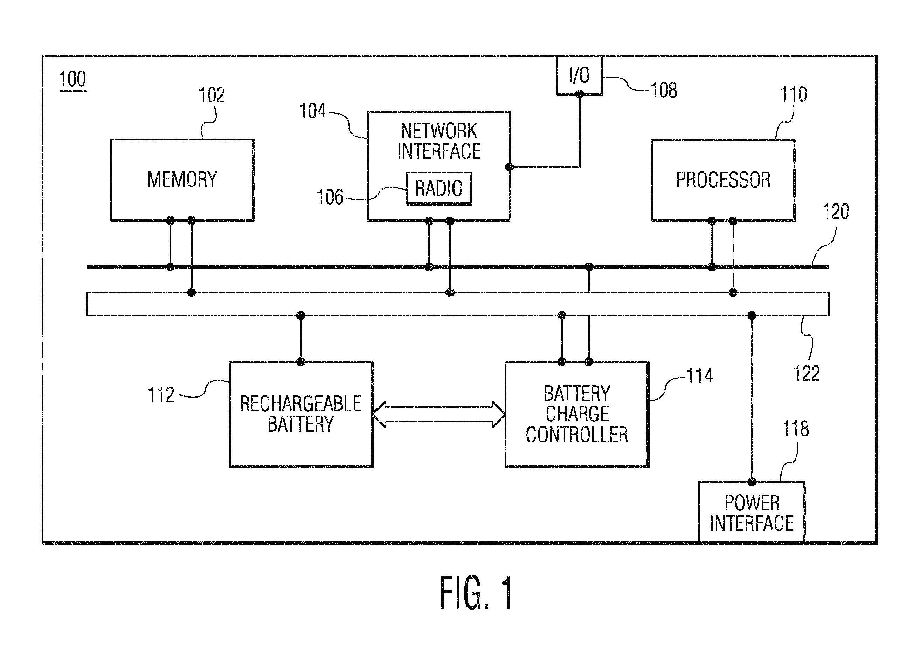

Turning now to Fig. 1, a block diagram of a VoIP residential gateway 100 is shown. The VoIP residential gateway includes several components, such as a memory 102, a network interface 104 having a radio 106, an I/O port 108 connected to the network interface, a processor 110, a rechargeable battery 112, a battery charge controller 114, and a power interface 118. In the embodiment of Fig. 1, the memory, network interface, processor, and battery charge controller are connected to a data bus 120 and the memory, network interface, processor, rechargeable battery, battery charge controller, and power interface are connected to a power bus 122. Typically, the power interface receives mains electricity from a mains power source and distributes that electricity to the memory, network interface, processor, and battery charge controller as needed via the power bus. Additionally, in an embodiment, the rechargeable battery stores an amount of charge from the electricity as defined by the charge settings of the battery charge controller. In an embodiment, the charge settings of the battery charge controller are configured by the processor executing instructions stored in the memory via the data bus. The charge settings include settings such as, for example, a charge termination voltage, an amount of current received for a period of time, or whether the battery should be storing charge or discharging.

In an embodiment, the charge stored in the rechargeable battery 112 can provide backup power to the memory 102, the network interface 104, and the processor 110 in the event of a power outage or if the mains power interface is otherwise unable to supply electricity. For example, if the rechargeable battery is charged to 5.5 Ampere-hours(Ah) and used to sustain a system consuming 1 Ampere from the battery, then the rechargeable battery will be able to provide backup power to the processor, network interface, and memory to continue operation for five and a half hours after a power outage occurs.

In many cases, consumer needs or technical standards place requirements on the length of time over which a rechargeable battery can provide backup power to a critical system, referred to herein as a back-up requirement. For example, a telephonic system may require that backup power be provided for four hours. In other embodiments, the length of time over which a rechargeable battery is required to provide backup power can further include a margin in order to ensure that the back-up requirement will be satisfied. For example, if the telephonic system has a back-up requirement that translates to 5 Ah, then a margined back-up requirement (i.e., the back-up requirement plus a margin) may require 5.5 Ah of stored charge in order to ensure that at least 5 Ah of backup power can be provided. In an embodiment, the back-up requirement and margined back-up requirement can be characterized in terms of watt-hours, amp-hours, and/or other measurable characteristics of the battery.

When a back-up requirement is specified for a rechargeable battery, it is desirable to confirm that the battery is able to provide backup power for, or in excess of, the back-up requirement by testing. In order to test a battery to confirm that the battery will be able to provide backup power for, or in excess of, the back-up requirement, many different battery testing models can be used. Typically, the models are physics-based models that utilize known physics equations to calculate expected results, empirical models that utilize information from previously observed life cycles, or a combination of models. For example, in an empirical-physics-based model, empirical data can be collected after at least 20% of the battery has been drained and used in a known equation to determine how long the remaining charge will take to drain. Typically, physics-based models are able to predict how much time is needed to fully drain a battery without having to fully drain the battery, but at the cost of accuracy since many of the measurements for the equations are taken by, for example, numerically integrating current and battery voltage after small partial battery discharges. Empirical models are usually more accurate since measurements are true measurements taken from empirical readings when the battery is drained, but typically require completely discharging and recharging the battery at regular intervals, which increases the stress on a battery over time.

Regardless of the testing method used, batteries are often regularly re-tested because some rechargeable batteries, such as lithium-ion batteries, deteriorate over time such that a battery previously determined to be capable of satisfying or exceeding a back-up requirement may no longer be able to do so. Deterioration is typically due to electrolyte degradation mechanisms (e.g., hydrolysis or thermal decomposition) and electrolyte oxidation that naturally occur and are accelerated when storing excessive charge in a battery for extended periods of time.

In accordance with an embodiment of the invention, a battery is charged as a function of a back-up requirement. For example, battery charging involves determining the amount of charge stored in a battery, modifying a charging parameter based on the stored charge of the battery and the back-up requirement, and charging the battery based on the charging parameter. In an embodiment, the charging parameter can be a charge termination voltage or an amount of current going into a battery for a period of time (current x time). In operation, if a battery, when fully charged, is determined to sustain a system for 30% more time than is required, then the charging parameter may be reduced. When the battery is next recharged, the battery will be charged based on the reduced charging parameter. For example, if the charging parameter is the charge termination voltage, then the charging termination voltage may be reduced by 0.2V.

Accordingly, the battery will be charged to a lesser degree of excess than on the previous charge. Alternatively, if the battery is determined to sustain the system for only 90% of the required time, then the charging parameter may be increased and, when the battery is next recharged, the battery will be charged based on the increased charging parameter. For example, if the charging parameter is the charge termination voltage, then the charging termination voltage may be increased by 0.2V. Thus, by reducing the degree of excess to which the battery is charged, the life of the battery can be prolonged because deterioration caused by excessive charging will be reduced.

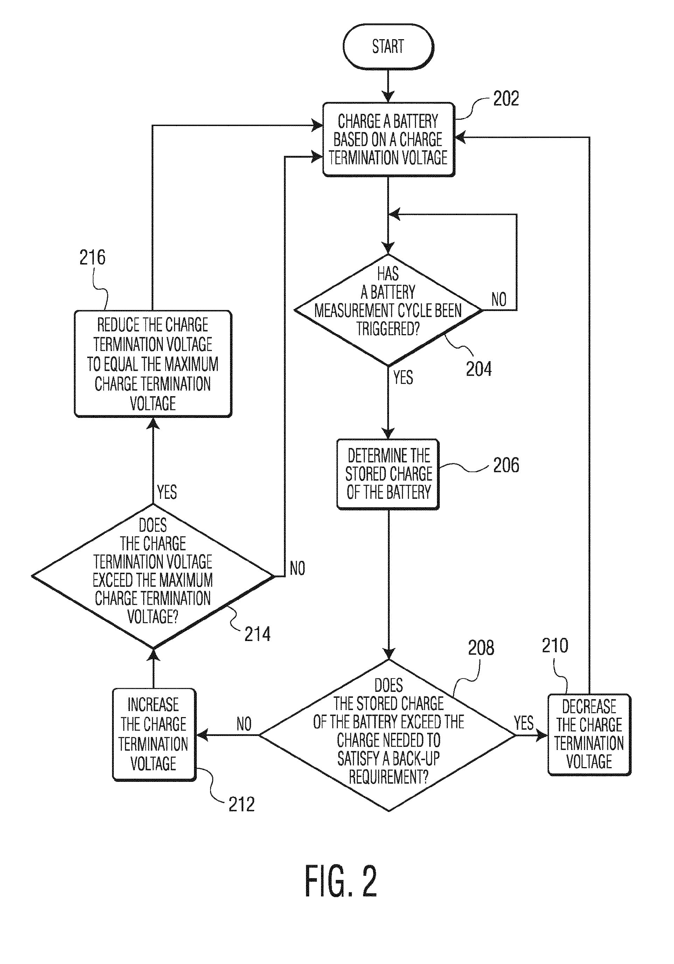

Fig. 2 is a flowchart diagram of a method for charging a battery when the charging parameter is the charge termination voltage of the battery. Initially, at block 202, a battery is charged based on a charge termination voltage. In an embodiment, before additional steps have been performed, the charge termination voltage will be equal to the maximum charge termination voltage as determined by the capacity of the battery. For example, when a 4.3V battery is first installed in a VoIP gateway, the charge termination voltage is initially equal to 4.3V (e.g., the capacity of the battery) and, as a result, the battery is charged until the voltage across the battery is equal to 4.3V. At decision point 204, it is determined whether a battery measurement cycle has been triggered. In an embodiment, a battery measurement cycle is triggered by the occurrence of a planned event or an unplanned event. In an embodiment, a planned event is, for example, a user-defined time at which the battery discharges (e.g., once per quarter) and an unplanned event is, for example, a power outage. In an embodiment, an unplanned event may not trigger a battery measurement cycle if the unplanned event does not sufficiently drain the battery (e.g., a power outage that does not drain enough power for testing the battery). In an embodiment, a planned event occurs on a fixed, user-defined interval that is reset if the battery is discharged before the expiration of the fixed, user-defined interval. For example, if battery measurement cycles are defined to be triggered by a planned event on three-month intervals (e.g., once per quarter), then a power outage (i.e., an unplanned event) will reset the interval and delay the triggering of the battery measurement cycle for another three months. In an embodiment, if a battery measurement cycle is not triggered, then the process repeats and does not advance to block 206.

Once a battery measurement cycle has been triggered, at block 206, the stored charge of the battery is determined. In an embodiment, the stored charge can be determined in terms of the voltage of the battery, the watt-hours of the battery, and/or the amp-hours of the battery and various techniques could be used to determine the above-identified parameters. In an embodiment, the determination can be made using a physics-based model, an empirical model, or a combination of the two as described above. At decision point 208, it is determined if the stored charge of the battery exceeds the charge needed to satisfy a back-up requirement. For example, if the VoIP gateway requires four hours of backup power (i.e., a four hour back-up requirement) and the stored charge of the battery charged to 4.3V exceeds the charge needed to provide five and a half hours of backup power, then the charge of the battery will be determined to exceed the charge needed to satisfy a back-up requirement. If the stored charge of the battery is determined to exceed the charge needed to satisfy the back-up requirement, then, at block 210, the charge termination voltage will be decreased. In an embodiment, the charge termination voltage is decreased by decreasing the value of the charge termination voltage by a fixed increment. For example, if a battery is determined to exceed the back-up requirement, then the charge termination voltage can be decreased by one 0.3V increment from, for example, 3.9V to 3.6V. Alternatively, if the stored charge of the battery is determined not to exceed the back-up requirement, then, at block 212, the charge termination voltage is increased. For example, the charge termination voltage will be increased by one 0.3V increment, from 3.9V to 4.2V. At block 214, it is determined whether the charge termination voltage now exceeds the maximum charge termination voltage. If not, then the method returns to block 202. If the charge termination voltage does exceed the maximum charge termination voltage of the battery, then, at block 216, the charge termination voltage is reduced to equal the maximum charge termination voltage. For example, if the charge termination voltage is increased by one 0.3V increment from 4.2V to 4.5V when the maximum charge termination voltage is 4.3V, then the charge termination voltage will be reduced to 4.3V. In an embodiment, if the charge termination voltage is determined to exceed the maximum charge termination voltage at block 214, then a message may be communicated to the user and/or to the service provider to indicate that the battery may not be able to satisfy the back-up requirement.

In an embodiment, the stored charge should not decrease below the minimum charge need to satisfy the back-up requirement. Accordingly, the charge termination voltage is modified in relation to the margined back-up requirement, thus ensuring that the back-up requirement is always met. For example, if the margined back-up requirement requires 4.5Ah of charge and the back-up requirement requires 4Ah of charge, then, if the charge termination voltage is decreased such that charging the battery to the charge termination voltage results in 4.2Ah of stored charge (i.e., less than the required 4.5Ah of charge), the charge termination voltage be increased despite the fact that the resultant stored charge (4.2Ah) still exceeds the back-up requirement of 4Ah. In an embodiment, if the charge termination voltage is equal to the maximum charge termination voltage of the battery (e.g., 4.3V for a 4.3V battery), but the margined back-up requirement is not exceeded, then the battery may need to be replaced.

At block 202, once the charge termination voltage has been modified, the battery is charged to the modified charge termination voltage. For example, if the charge termination voltage is decreased to 3.9V from 4.2V, then the battery will be charged until the voltage across the battery equals 3.9V and if the charge termination voltage of the battery is increased to 4.3V from 4.2V, then the battery will be charged until the voltage across the battery equals 4.3V. In an embodiment, once charged, the battery remains charged until a planned or unplanned event occurs. In an embodiment, the steps of Fig. 2 are repeatedly performed on a fixed interval over the life of the battery (e.g., once per quarter).

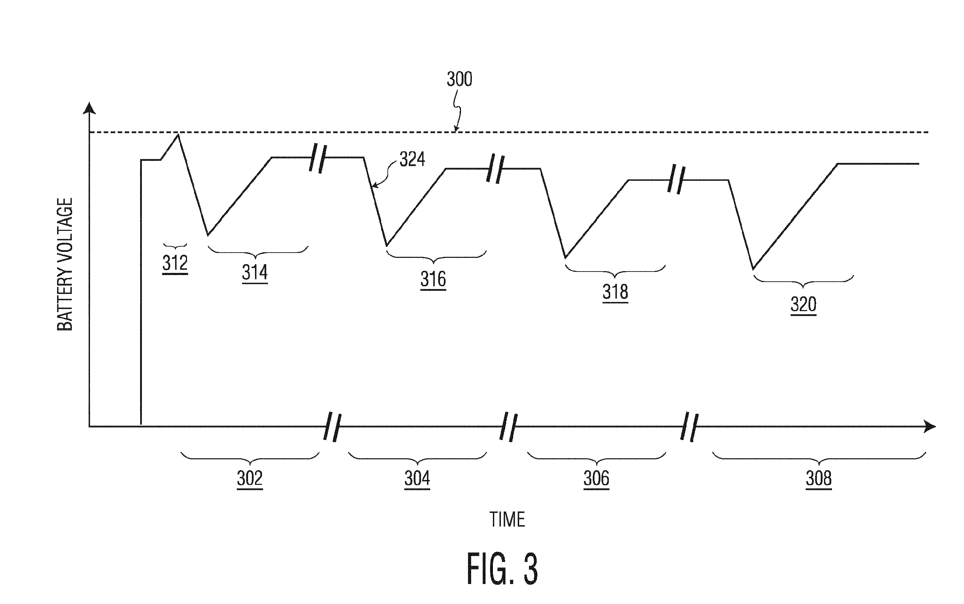

In an embodiment, if the initial stored charge of the battery causes the battery to exceed the margined back-up requirement, then the stored charge will be decreased by decreasing the charge termination voltage until it is determined that the stored charge of the battery does not cause the battery to exceed the margined back-up requirement, at which point the charge termination voltage will be increased. Fig. 3 is a graph of the voltage of a battery, indicated by the solid line 324, relative to the maximum charge termination voltage of the battery over a series of charging cycles in accordance with an embodiment of the invention. In the embodiment of Fig. 3, a battery is initially (e.g., when first installed) charged to 100% of the maximum charge termination voltage of the battery (dotted line 300 indicates 100% of the maximum charge termination voltage) during the first charge cycle 312. Then, after a first battery measurement cycle 302 is triggered (e.g., by a manual test or a power outage), it is determined that the margined back-up requirement is exceeded. As a result of determining that the margined back-up requirement is exceeded, the battery is charged to a lower percentage of the maximum charge termination voltage of the battery during the next charge cycle. For example, the battery is charged to 98% of the maximum charge termination voltage during a second charge cycle 314.

After a second battery measurement cycle 304 and a third battery measurement cycle 306 are triggered, it is again determined that the margined back-up requirement is exceeded and, thus, the battery is charged to an even lower percentage of the maximum charge termination voltage of the battery during a third charge cycle 316 and a fourth charge cycle 318 respectively. For example, the margined back-up requirement may still be exceeded after the second battery measurement cycle and after the third battery measurement cycle and so the battery is charged to 96% of the maximum charge termination voltage during a third charge cycle and to 94% of the maximum charge termination voltage during a fourth charge cycle. However, after a fourth battery measurement cycle 308 is triggered, it is determined that the margined back-up requirement is no longer exceeded. As a result, the battery is then charged to a greater percentage of the maximum charge termination voltage of the battery than during the previous charge cycle during a fourth charge cycle 320. For example, the battery is again charged to 96% of the maximum charge termination voltage during a fourth charge cycle. Thus, during the time that the margined back-up requirement is exceeded, the battery can be increasingly undercharged (i.e., charged to some amount less than the maximum charge termination voltage), which reduces the amount of stress placed on the battery and can ultimately extend the life of the battery.

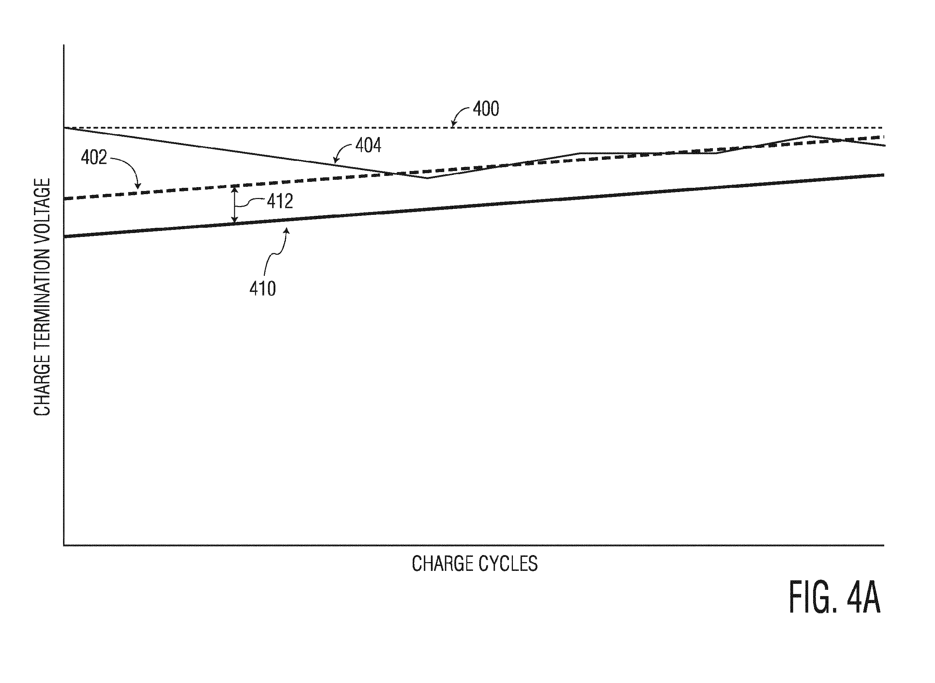

In an embodiment, the charge termination voltage, which ultimately determines the amount of charge stored in the battery, is modified (e.g., increased or decreased) by a fixed increment. Fig. 4A is a graph of the charge termination voltage 404 over a series of charging cycles when a margin is utilized to ensure that the back-up requirement will be met. In Fig. 4A, the maximum charge termination voltage of the battery is indicated by the upper line 400 and the charge termination voltage needed to satisfy a back-up requirement is indicated by the lower line 410, which increases to compensate for battery deterioration at a fixed rate. The charge termination voltage needed to satisfy a margined back-up requirement is indicated by line 402 and the margin is indicted at 412. When the charge termination voltage of the battery exceeds the charge termination voltage needed to satisfy the margined back-up requirement, the charge termination voltage is decreased, for example, by a fixed increment of 0.5V and, when the charge termination voltage of the battery does not exceed the amount of stored charge needed to satisfy the margined back-up requirement, the charge termination voltage can be increased by a fixed increment of 0.5V, which may cause the charge termination voltage to oscillate around a voltage needed to satisfy the margined back-up requirement. Because the charge termination voltage oscillates around the charge termination voltage needed to satisfy the margined back-up requirement instead of the back-up requirement, the resultant stored charge of the battery will not fall below the stored charged needed to satisfy the back-up requirement.

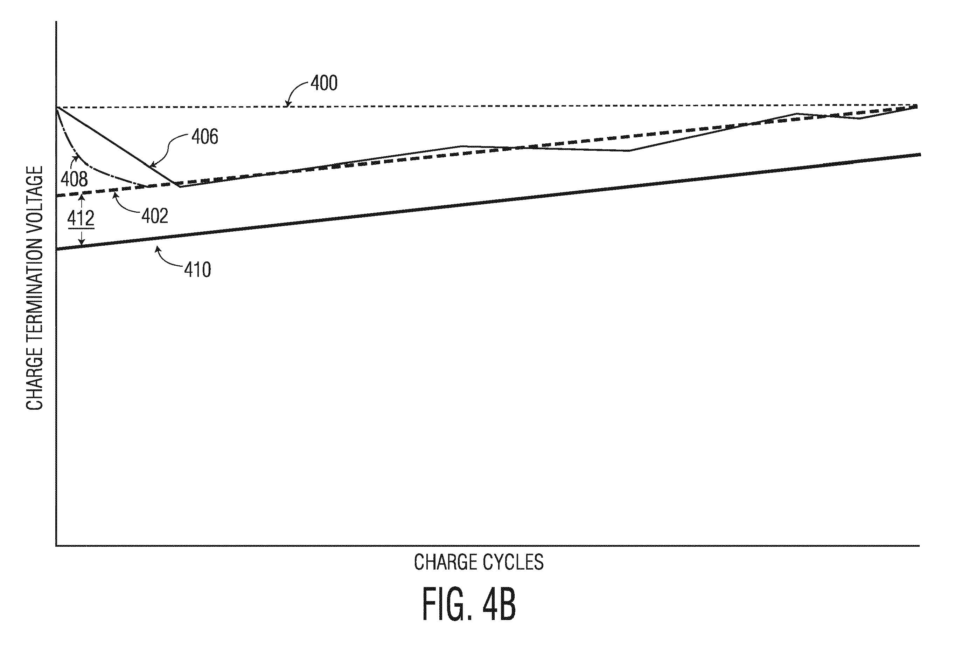

In another embodiment, the charge termination voltage can be modified at variable rates in order to enhance the reduction of stress on the battery by making the charge termination voltage converge more rapidly on a voltage that will just meet the margined back-up requirement. Fig. 4B is a graph of the charge termination voltage over a series of charging cycles when the charge termination voltage is modified at variable rates. In Fig. 4B, the maximum charge termination voltage of a battery is indicated by the upper line 400, the charge termination voltage needed to satisfy the back-up requirement is indicated by the lower line 410, the margin is indicated by 412, and the charge termination voltage needed to satisfy the margined back-up requirement is indicated by the lower line 402. As described above with reference to Fig. 4A, the charge termination voltage needed to satisfy the back-up requirement increases to compensate for battery deterioration at a fixed rate. In other embodiments, the charge termination voltage needed to satisfy the back-up requirement can increase at a variable rate. In one embodiment, as indicated by solid line 406, the charge termination voltage can be decreased at a larger fixed increment when the margined back-up requirement is exceeded in order to more rapidly converge on a charge termination voltage that will just meet the margined back-up requirement. For example, when compared to Fig. 4A, line 406 in Fig. 4B reaches an inflection point (e.g., a point where the charge termination voltage has been decreased below the level needed to satisfy the margined back-up requirement) that is further left than the inflection point in line 404 in Fig. 4A. Then, when the margined back-up requirement is not exceeded, the charge termination voltage can be increased by a smaller fixed increment. For example, in Fig. 4B, the slope of line 406 is smaller after the inflection point. In an embodiment, the smaller fixed increment is greater than the rate at which the battery can deteriorate in the time between two planned events. Accordingly, the charge termination voltage will, at least, result in a charge that is able to satisfy the back-up requirement even after the effects of deterioration. For example, if the battery can be expected to deteriorate 0.5% between two planned events, then an increment greater than 0.5% is selected because, even if the battery deteriorates the expected amount, the increment will have increased the charge termination voltage to a voltage that can still satisfy the margined back-up requirement after the deterioration. In an embodiment, the increment by which the charge termination voltage is decreased or increased can be based on computations performed using physical or empirical modeling.

Alternatively, the charge termination voltage can be decreased exponentially in order to converge on a charge termination voltage that will just meet the margined back-up requirement even more quickly. For example, the stored charge goal can be rapidly decreased by an exponential increment of 4% until the charge termination voltage is decreased below the charge termination voltage needed to satisfy the margined back-up requirement and then slowly increased by a smaller fixed increment after several charge cycles to offset the battery deterioration, as indicated by the dashed and dotted line 408 such that the inflection point is shifted further left than the inflection point in line 406.

In an embodiment, the above-described methods can be performed by the VoIP residential gateway of Fig. 1. In an embodiment, the battery charge controller 114 may be implemented in hardware, software, or a combination thereof. For example, the battery charge controller, the processor 110, and memory 102 are configured to monitor the voltage of the rechargeable battery 112 and control the voltage by modifying the charge termination voltage. In an embodiment, the charge termination voltage is modified in response to a charge termination voltage value that is controlled by the processor executing software instructions that are stored in the memory. Additionally, in an embodiment, the above described battery charging technique can be deactivated through the battery charge controller and the battery can be allowed to charge to the maximum charge termination voltage at each charging cycle.

While the operations of the methods herein are described for use with a VoIP residential gateway, the methods can be applied to other devices that place a back-up requirement on a rechargeable battery utilized by the device. Additionally, although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods may be implemented using software instructions stored on a computer useable storage medium for execution by a computer and/or a battery charge controller. As an example, an embodiment of a computer program product includes a computer useable storage medium to store a computer readable program that, when executed on a computer, causes the computer to perform operations, as described herein.

Furthermore, embodiments of at least portions of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disc, and an optical disc. Current examples of optical discs include a compact disc with read only memory (CD-ROM), a compact disc with read/write (CD-R/W), a digital video disc (DVD), and a Blu-ray disc.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A method for charging a battery, **characterized by** the steps of determining a stored charge of a battery (112); modifying a charging parameter based on the stored charge of the battery and a back-up requirement; and charging the battery (112) based on the charging parameter.

2. The method of claim 1, wherein the charging parameter is further modified based on a margin.

3. The method of claim 2, wherein modifying the charging parameter comprises decreasing the charging parameter if the determined stored charge of the battery exceeds the back-up requirement plus the margin and increasing the charging parameter if the determined stored charge of the battery does not exceed the back-up requirement plus the margin.

4. The method of claim 1, wherein the charging parameter is a charge termination voltage.

5. The method of claim 1, wherein the charging parameter is modified by a fixed or a variable increment.

6. The method of claim 1, wherein the determining and modifying are triggered by the occurrence of an event that discharges the battery.

7. The method of claim 1, wherein the determining and modifying are triggered by the expiration of a fixed interval and further comprising resetting the fixed interval if the battery is discharged before the expiration of the fixed interval.

8. The method of claim 1, wherein the back-up requirement is defined in terms of a length of time over which the battery can supply power.

9. A computer system, the computer system comprising: a battery (112); a power interface (118), coupled to the battery (112) via a power bus (122); a battery charge controller (114) coupled to the battery (112) via a data bus (120); and a processor (110) and memory (102) coupled to the battery charge controller (114) via the data bus (120) and to the power interface (118) via the power bus (122); **characterized in that** the battery charge controller (114), the processor (110), and the memory (102) are configured to: determine a stored charge of the battery (112); modify a charging parameter based on the stored charge of the battery (112) and a back-up requirement; and control charging of the battery (112) based on the charging parameter.

10. The computer system of claim 9, wherein the charging parameter is further modified based on a margin.

11. The computer system of claim 10, wherein the system is further configured to decrease the charging parameter if the determined stored charge of the battery exceeds the back-up requirement plus the margin and to increase the charging parameter if the determined stored charge of the battery does not exceed the back-up requirement plus the margin.

12. The computer system of claim 9 wherein the charging parameter is a charge termination voltage.

13. The computer system of claim 9, the system is further configured to modify the charging parameter by a variable increment.

14. The computer system of claim 9 wherein the computer system is triggered to determine a stored charge of the battery and modify a charging parameter based on the stored charge of the battery and back-up requirement by the expiration of a fixed interval and is further configured to reset the fixed interval if the battery is discharged before the expiration of the fixed interval.

15. A non-transitory computer-readable storage medium **characterized in that** the medium includes instructions that, when executed in a computing device, cause the computing device to carry out the steps of: determining a stored charge of a battery (112); modifying a charging parameter based on the stored charge of the battery (112) and a back-up requirement; and charging the battery (112) based on the charging parameter.

16. The non-transitory computer-readable storage medium of claim 15, wherein the charging parameter is further modified based on a margin.

17. The non-transitory computer-readable storage medium of claim 15 wherein modifying the charging parameter comprises decreasing the charging parameter if the determined stored charge of the battery exceeds the back-up requirement plus a margin and increasing the charging parameter if the determined stored charge of the battery does not exceed the back-up requirement plus a margin.

18. The non-transitory computer-readable storage medium of claim 15, wherein the charging parameter is modified by a variable increment.

19. The non-transitory computer-readable storage medium of claim 15 wherein the determining and modifying are triggered by the expiration of a fixed interval and further comprising resetting the fixed interval if the battery is discharged before the expiration of the fixed interval.

20. The non-transitory computer-readable storage medium of claim 15, wherein the back-up requirement is defined in terms of a length of time over which the battery can supply power.
